# EUROPEAN PATENT APPLICATION

(11) **EP 2 136 561 A1**
(43) Date of publication of application: **23.12.2009**
(21) Application number: 09163224.0
(22) Date of filing: 19.06.2009
(51) Int. Cl.: H04N 7/18, A01K 93/02, A01K 97/12, H04N 5/225, A01K 97/00, H04N 7/10, H04N 7/00

(54) **Video capture system with wireless transmission, in particular for fishing**

(30) Priority: 20.06.2008 IT MC20080121
(71) Applicant: Luzi, Nazario, 63023 Fermo (AP) (IT)
(72) Inventor: Luzi, Nazario, 63023 Fermo (AP) (IT)
(74) Representative: Baldi, Claudio

(57) **Abstract**

A video capture system is disclosed, in particular for fishing, comprising a transmitter unit (Tx) connected by a cable transmission line (L) to a repeater unit (Rp) that is connected to a receiver unit (Rx) in wireless mode. The transmitter unit (Tx) comprises a telecamera (1) and a transmit driver (3) of the video signal captured by the telecamera (1) and is adapted to be connected to the fishing line (101) of a fishing rod near the hook (102) of the fishing line to film the fish when it approaches the bait. The repeater unit is position in a float (200) near the transmitter unit (Tx). The receiver unit (Rx) is adapted to be arranged near the user and comprises a receive driver (5) of the video signal with suitable video outputs adapted to be connected to a display device to display the images filmed by the telecamera (1).

## Description

The present patent application for invention relates to a video capture system, with wireless transmission of the video signal, in general for fishing and for low-cost documentary films.

The invention relates to the field of sports fishing, and in particular to the fishing technique known as "trolling". Trolling is practised all over the world as entertainment activity using easy-to-find equipment. This sport can be practised all over the world without any type of limitations; moreover, a booming tourism activity is related with the organisation of fishing travels and holidays in very famous resorts.

One of the most important aspects related with the capture of predators is the documentation, which is mostly photographic, of the quality of the catch. Once the fish has been hoisted out of the water into the boat, regardless of the fact that it is released or not, the fish is filmed as a proof of skill. In actual fact, the most important documentation should refer to the capture in water, from the moment in which the predator sees the bait to the moment in which the fish is hoisted onto the boat, passing through the "fight" and resistance of the fish.

Trolling is practised with a fishing line that comes out of the fishing rod in the boat for a length that varies from thirty to sixty metres approximately and this causes severe technical constraints for the realisation of a device able to capture the images of the fish when it is caught.

In fact, the catch must be filmed with a device composed of a telecamera, a transmission means, an electrical power supply means and a receiver. The video capture device must be immersed in water, must be compact in size, must not interfere with the fishing activities, must provide acceptable operation autonomy and must be easy to handle.

Three are the main problems to solve:
- To realise a transmission means with very small size in order not to interfere with the fishing activity and to distribute the acquired video signal through a connection provided with the same characteristics of lightness and miniaturisation.
- To provide and suitably distribute the electrical power that is necessary to operate the video capture device, which is immersed in water.
- To integrate the various components in such a way not to hinder or impair the efficacy of the fishing technique that is used on the boat.

The known technique has not been able to solve the said problems and for this reason there are no video capture systems integrated in a fishing rod that are able to film the fish when it takes the bait during trolling.

The purpose of the present invention is to solve the aforementioned problems by providing a video capture system for fishing, which is reliable, efficient, autonomous and integrated in a fishing rod without interfering with the fishing activity.

This purpose has been achieved according to the invention with the characteristics described in the enclosed independent claim 1.

Advantageous embodiments of the invention are disclosed in the dependent claims.

According to the invention, the video capture system, in particular for fishing, comprises:
- a transmitter unit comprising a telecamera and a transmit circuit of the video signal captured by the telecamera, said transmitter unit being adapted to be connected to the fishing line of a fishing rod near the hook to film the fish when it approaches the bait,
- a repeater unit arranged on a float near the transmitter unit and comprising a receive driver of the video signal, and a wireless transmitter to transmit the video signal over the air,
- a cable transmission line that connects the transmitter unit to the repeater unit, and
- a receiver unit adapted to be positioned near the user and comprising a wireless receiver of the video signal sent by the repeater unit and a receive driver of the video signal with at least one video output adapted to be connected to a display device to display the images filmed by the telecamera.

The advantages of the video capture system according to the invention are evident.

The possibility of video capture with the device of the invention is extremely interesting for fishing purposes and also from the theoretical viewpoint, since it is achieved without modifying the parameters of the natural environment of the prey, which can be studied in its natural hunting behaviour. From a technical viewpoint, the device of the invention provides a visual proof of the dynamic behaviour of the bait, of the attack or refusal of the fish and of other environmental parameters that cannot be observed otherwise. From the sports viewpoint, the device advantageously provides a precise documentation of the fishing activity, which can be shared and stored.

The device of the invention can be simply integrated in the fishing equipment, can be used to identify anomalous situations during fishing (artificial bait covered with algae) and can provide information on the actual capability of the fishing technique.

Additional characteristics of the invention will become more evident after a detailed description that refers to a merely illustrative, not limiting, embodiment, as shown in the enclosed figures, wherein:
Fig. 1 is a diagrammatic view of a video capture system according to the invention used for trolling;
Fig. 2 is a block diagram that illustrates the video capture system of Fig. 1;
Fig. 3 is a circuitry diagram of the block diagram of Fig. 2;
Fig. 4 is a block diagram that illustrates in detail the repeater unit of Fig. 2; and
Fig. 5 is a block diagram that illustrates in detail the transmitter unit of Fig. 2.

The video capture system, in particular for fishing, of the invention is disclosed with reference to the enclosed figures.

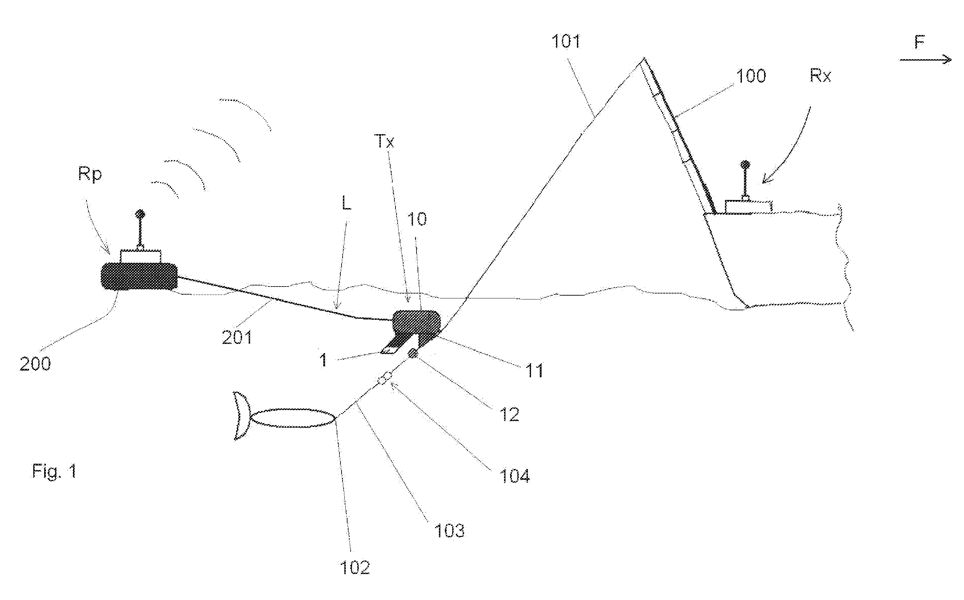

With reference to Fig. 1, a fishing rod, in particular for trolling, is disclosed. The fishing rod comprises a rod (100) that is anchored, for instance, on a boat. The rod (100) supports a fishing line (101) provided at the end with a hook (102), eventually with bait. The fishing line (101) is wound with a reel normally provided on the rod (100).

The video capture system of the invention comprises:
- a transmitter unit (Tx) adapted to be positioned near the hook (102) of the fishing line,
- a repeater unit (Rp) positioned on a float (200) connected by means of a mechanical retention cable (201) to the transmitter unit (Tx), and
- A receiver unit (Rx) positioned near the user, for example on the boat.

The transmitter unit (Tx) is electrically connected to the repeater unit (Rp) over a cable transmission line (L), as illustrated below. The repeater unit (Rp) is connected to the receiver unit (Rx) by means of a wireless connection system.

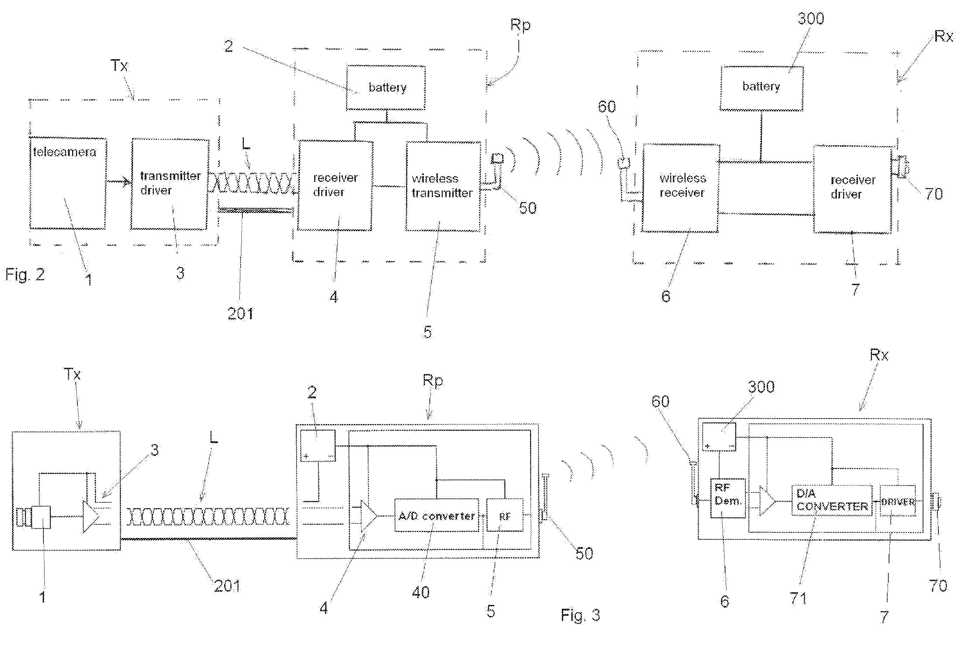

With reference to Figs. 2 and 3, the transmitter unit (Tx) comprises a video acquisition device (1) and a transmit circuit (driver) (3). The video acquisition device is an underwater microtelecamera (1), such as, for example, a Sharp telecamera, with composite video output, with 32mm x 32mm x 32mm (H) dimensions.

The driver circuit (3) is provided with an equalizer to equalize the analogue video signal, preferably analogue, filmed by the camera (1) and a transmitter to transmit the equalized signal over the transmission line (L). The driver circuit (3) can be integrated in a printed circuit board.

The repeater unit (Rp) comprises a receive circuit (driver) (4), a wireless transmitter (5) with transmit antenna (50) and a battery or power supply (2) to supply the receive driver (4) and the wireless transmitter (5).

The receive driver (4) comprises a receiver and an equalizer to receive and equalize the analogue video signal transmitted over the transmission line (L) to obtain a composite video analogue signal (CVBS). Optionally, the repeater (Rp) can comprise an analogue-digital converter (40) to obtain a video digital signal that is sent to the wireless transmitter (5) for digital transmission.

The wireless transmitter (5) is preferably a radiofrequency modulator that provides for transmission of the video signal modulated in frequency with 2.4 GHz carrier. Such a modulator provides for wireless transmission of the signal of about 200 m, which is a sufficient distance, considering that a trolling fishing line is normally shorter than 80 m.

The camera (1) and the transmit circuit (3) of the transmitter unit (Tx) can be powered with a battery inserted in the transmitter unit. However, the presence of such a battery would cause the following problems for the transmit circuit in water:
- The battery must be removed for recharging: This makes it especially difficult to find a waterproof micro-connector suitable to connect the battery to the camera (1) and to the transmit driver (3). Although it is possible to design a wireless recharging system of the camera and transmit circuit (3), this makes it difficult to maintain the small size of the transmitter of the transmit driver (3).
- The battery must have a small size, but discreet capacity. The dimensioning of power for the transmitter of the transmit driver (3) requires a battery of at least 1.5-2 W. Currently, 150 mAh 3V lithium-polymer battery packs have 4x20x20 mm size (for example, a MAXPOWER battery). In the specific case, at least three battery packs must be combined to meet the power requirements of the transmitter, with a volume of 12x20x30 mm and a weight of many grams. Therefore, a switching power supply must be designed to provide the correct power to the transmit driver (3) and the camera (1).

In order to solve the said drawbacks, the power supply of the camera (1) and the transmit circuit (3) is directly taken from the power supply (2) of the repeater (Rp). To that end, a dedicated power supply line can be used to connect the power supply (2) to the transmitter (Tx).

Preferably, the transmitter (Tx) is powered by the same video cable (L). In practical terms, electrical power supply has been inserted in the same physical support (L) of the video transmission. In view of the above, the power supply (2) resides in the repeater (Rp) that sends it to the balanced video cable (L). The transmitter (Tx) splits power supply for its own requirements and provides the video signal on the same cable (L) used for power supply.

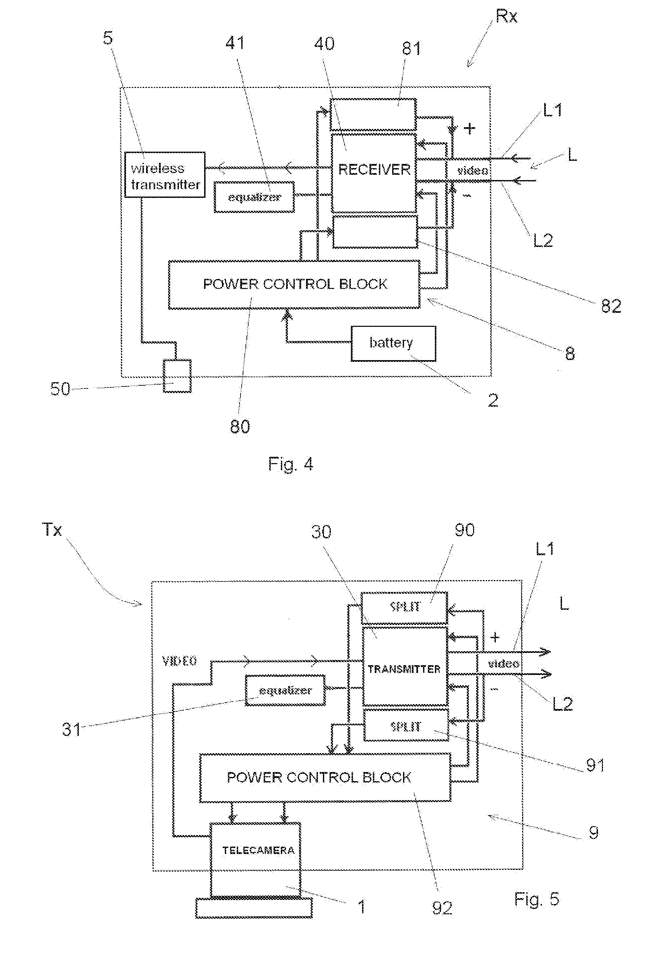

As shown in Figs. 4 and 5, it has been necessary to design:
- a mixing circuit (8) in the repeater (Rp) to mix the power supply from the power supply (2) on the video signal sent to the transmitter (Tx) over the line (L), and
- a split circuit (9) in the transmitter (Tx) to split the power supply signal from the video signal transmitted over the transmission line (L).

Advantageously, the transmission line (L) is provided with a UTP cable that comprises only a pair of unscreened twisted wires (L1, L2). The cables (L1, L2) are preferably multi-wire cables composed of a plurality of copper strands. The UTP cable reduces the interference and disturbance of the video signal that is being transmitted. It must be noted that such a UTP cable has an approx. diameter of 1 mm and therefore is not a hindrance for fishing.

A technique has been used to minimise the interference on the video signal by reducing the phase problems introduced by the same circuit.

As shown in Fig. 4, the battery (2) of the repeater (Rp) is connected to a power control block (80) that powers the receive circuit (40) and the equalizer (41). The power control block (80) is connected to two mixers (81, 82) that send power supply (+) and (-) on the two cables (L1, L2) of the UTP cable, mixing it with the video signal transmitted by the cables (L1, L2).

As shown in Fig. 5, the split circuit (9) provided in the transmitter unit (Tx) is provided with two splitters (90, 91) respectively connected to the cables (L1) and (L2) to split the power signals (+) and (-) coming from the repeater unit (Rp) from the video signals introduced on the cables (L1, L2) by the transmit circuit (30) of the transmitter unit (Tx).

The splitters (90, 91) are connected to a power control block (92) that receives power from the splitters (90, 91) and distributes it to the transmitter (30), equalizer (31) and camera (1).

The dimensioning of the power supply (2) provided by the repeater (Rp) to the transmitter (Tx) has considered the relevant resistive losses. Said resistive losses are not negligible since the transmission cable (L) has a very small section and therefore a bonding resistance of 25 Ohm every 100 metres. Additionally, the losses of the split circuit (9) must be considered. Said losses have been balanced by calculations in order to provide supply voltage at the ends of the transmitter (30) with the ideal nominal value for the components to minimise the operation of the internal electrical adjusters. Based on said calculations, the battery (2) of the repeater has been chosen with 3.5 W power.

Going back to Figs. 2 e 3, the receiver unit (Rx) comprises a wireless receiver (6) with receive antenna (60) and a receive circuit (driver) (7) with at least one video output (70) for conneciton of a display device.

The wireless receiver (6) is preferably a radiofrequency demodulator.

The receive driver (7) comprises a receiver and an equalizer to receive and equalize the video signal capture by the wireless receiver (6). Optionally, the receive driver (7) can comprise a digital-analogue converter (71) to obtain an outgoing composite analogue signal (CVBS). A display device can be connected to the composite video output (CVBS) to display the images filmed by the camera (1) in real time.

The receiver unit (Rx) is provided with power supply or battery (300) to supply the wireless receiver (6) and the receive driver (7). The power supply (300) can be external to the receiver unit (Rx) and can be also provided on the boat.

Going back to Fig. 1, the transmitter unit (Tx) is contained inside a waterproof casing (10) provided at the end with the camera (1) facing the ending section (103) of the fishing line with the hook (12). The body (10) of the transmitter is slidingly mounted on the fishing line (101), for example by means of ring-shaped slides (11). The transmitter unit (Tx) slides and is guided by the fishing line (101) due to gravity and also because of the motion of the boat (in the direction of arrow F) and the friction of the water that take it towards the bait. A stopper (12) in the fishing line stops the descending travel of the transmitter unit (Tx) that remains tense and directed towards the bait. The front slide (11) of the transmitter unit (Tx) is stopped against the stopper (12).

Generally, the ending section (103) of the fishing line with the bait is connected to the fishing line (101) by means of a snap-hook (104). Therefore, the stopper (12) is positioned in the fishing line (101) at a short distance from the round element (104).

The casing (10) is connected to the float (200) of the transmitter by means of the mechanical retention cable (201) with sufficient length to allow the transmitter unit (Tx) to get near the bait.

The advantages of the device of the invention are numerous:
- smaller size, lower weight and lower mechanical complication of the transmitter (Tx),
- the technology that provides for inserting the remote power supply on the UTP cable (L) that transports the video signal allows for ideal power control, since the repeater (Rp), which is on the float (200) at a certain distance from the fishing line (101), can use a battery pack (4) of suitable dimensions,
- the use of a UTP cable (L) with only two wires (L1, L2) allows for better integration in the fishing system due to the small dimensions.

A further development of the device may be employed for spinning fishing in fresh water, where video capture is in digital format and the information is stored in an internal memory contained in the device with the camera (1). In this way, after hoisting, the transmitter unit (Tx) makes the film available through a radio digital connection. The device can also be used alone, without bait, for visual reconnaissance of fishing area.

In such a case, a digitalization and video compression circuit is integrated in the circuit that contains the camera (1) and a solid memory is used to collection the information. After recovering the device, a radio digital connection is used to transfer the video file to any multimedia player and see the fish population in the explored area.

Obviously, the video memory can be also provided in the repeater unit (Rp) downstream the analogue-digital converter (40).

Numerous variations and modifications can be made to the present embodiments of the invention by an expert of the field, while still falling within the scope of the invention as claimed in the enclosed claims.

## Claims

1. Video capture system, in particular for fishing, comprising:
- A transmitter unit (Tx) comprising a telecamera (1) and a transmit driver (3) of the video signal captured by the camera (1), said transmitter unit (Tx) being adapted to be connected to the fishing line (101) of a fishing rod in such a way to be positioned near the hook (102) of the fishing line to film the fish when it approaches the bait,
- a repeater unit (Rp) arranged on a float (200) near the transmitter unit (Tx) and comprising a receive driver (4) of the video signal, and a wireless transmitter (5) to transmit the video signal over the air,
- A cable transmission line (L) that connects the said transmitter unit (Tx) to the said repeater unit (Rp), and
- a receiver unit (Rx) adapted to be positioned near the user and comprising a wireless receiver (6) of the video signal sent by the repeater unit (Rp) and a receive driver (7) of the video signal with at least one video output (70) adapted to be connected to a display device to display the images filmed by the telecamera.

2. Video capture system according to claim 1, **characterised in that** it comprises a power source (2) provided in the repeater unit (Rp) to power the receive driver (4) and the wireless transmitter (5) of the repeater unit (Rp) and send the power supply over the cable transmission line (L) to power the camera (1) and the transmit driver (3) of the transmitter unit (Tx).

3. Video capture system according to claim 2, **characterised in that** the power supply from the power source (2) is sent over the same cables of the transmission line (L) that transmit the video signal.

4. Video capture system according to any one of the above claims, **characterised in that** the cable transmission line (L) comprises a UTP cable with only one pair of unscreened twisted multi-wire cables (L1, L2).

5. Video capture system according to claim 3 or 4, **characterised in that:**
- The repeater unit (Rp) comprises a mixer circuit (9) to mix the power supply from the power source (2) with the video signal transmitted over the cable transmission line (L), and
- The transmitter unit (Tx) comprises a split circuit (9) to split the power supply from the video signal transmitted over said cable transmission line (L) in such a way to power the transmit driver (3) and the camera (1).

6. Video capture system according to any one of the above claims, **characterised in that** the transmitter unit (Tx) is contained in a watertight enclosure (10) that is slidingly mounted on the fishing line (101) of the fishing rod.

7. Video capture system according to claim 6, **characterised in that** the casing (10) of the transmitter unit is connected to the float (200) of the repeater unit by means of a mechanical retention cable (201).

8. Video capture system according to any one of the above claims, **characterised in that** the wireless transmitter (5) of the repeater unit (Rp) and the wireless receiver (6) of the receiver unit (Rx) respectively comprise a radiofrequency modulator and demodulator.

9. Video capture system according to any one of the above claims, **characterised in that** the repeater unit (Rp) also comprises an analogue-digital converter (40) upstream the wireless transmitter (5) to transmit the video digital signal.

10. Video capture system according to any one of the above claims, **characterised in that** the receiver unit (Rx) also comprises an analogue-digital converter (71) downstream the wireless receiver (6) to obtain an analogue video output.

11. Video capture system according to any one of the above claims,
**characterised in that** it comprises a memory in which the video images are stored, contained in the said camera (1) and/or in the repeater unit (Rp).

12. Fishing rod **characterised in that** it comprises a video capture system according to any one of the above claims.
